# EUROPEAN PATENT APPLICATION

(11) **EP 1 113 232 A2**
(43) Date of publication of application: **04.07.2001**
(21) Application number: 00311419.6
(22) Date of filing: 20.12.2000
(51) Int. Cl.: F24F 5/00

(54) **Pipe mat for air-conditioning**

(30) Priority: 28.12.1999 JP 37569399; 14.09.2000 JP 2000279249
(71) Applicant: Toyox Co., Ltd., Kurobe-shi Toyama 938-0806 (JP)
(72) Inventor: Miyamura, Masashi, Korobe-shi, Toyama 938-0801 (JP)
(74) Representative: Carpmael, John William Maurice

(57) **Abstract**

The present invention provides a pipe mat used for air-conditioning which is capable of preventing disadvantages associated with a rectangle-shaped main pipe and solving a variety of conventional problems produced in a main pipe of circular section. In the present invention, the above challenges are resolved. A pipe mat used for air-conditioning for cooling or heating air through thermal radiation from cooling or heating fluid, includes a pair of main pipes (MP) made of a synthetic resin which have a larger sectional area, and a plurality of heat-exchange pipes (HP) made of a synthetic resin which have a smaller sectional area, both ends of each heat-exchange pipe (HP) being heat-welded between the pair of main pipes (MP), the fluid flowing from one of the main pipes (MP) through the heat-exchange pipes HP to the other main pipe (MP) for the thermal radiation. In such pipe mat, the main pipe (MP) is formed in flatness, and has corners (22) rounded inside, and the heat-exchange pipes (HP) are heat-welded onto a side surface (13) corresponding to the thickness of the main pipe (MP).

## Description

### BACKGROUND OF THE INVENTION

### 1. FIELD OF THE INVENTION

This invention relates to a pipe mat used in air-conditioning which cools or heats air using thermal radiation from cooling or heating fluid that flows through heat-exchange pipes.

### 2. DESCRIPTION OF RELATED ART

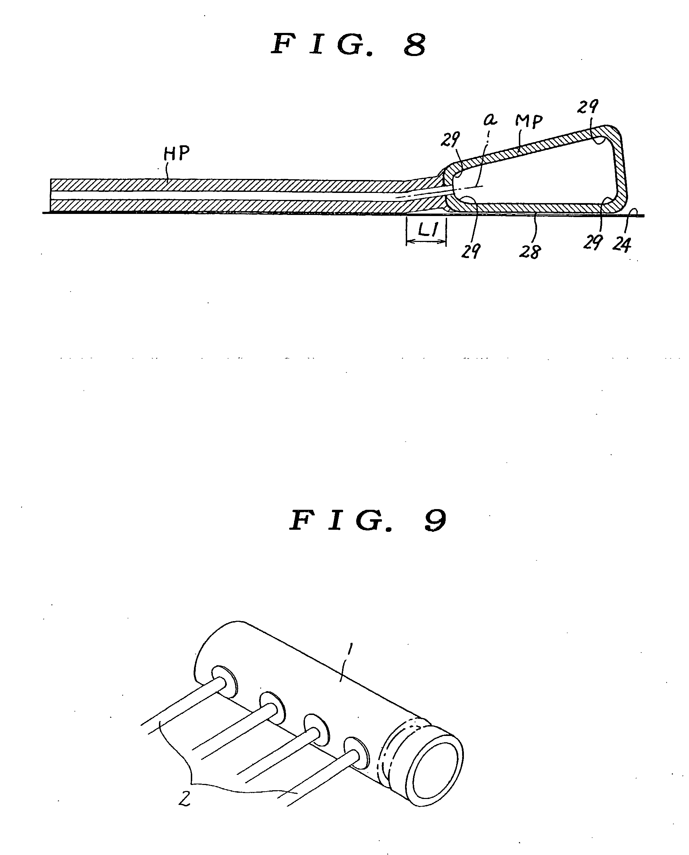

Fig. 9 illustrates a known pipe mat of such type. The pipe mat is provided with a pair of main pipes 1 of circular section made of a synthetic resin, and á plurality of heat-exchange pipes 2 made of a synthetic resin which have a smaller diameter than that of the main pipe 1. Both ends of the heat-exchange pipe 2 are heat-welded between the pair of main pipes 1, but Fig. 9 illustrates only one of the pair of the main pipes 1. It should be noted that there are various types of a pipe mat: 1) a type in which the two main pipes are arranged in parallel to each other; 2) a type in which the two main pipes are superimposed on each other with the heat-exchange pipes 2 being bent; and 3) a type in which the two main pipes are coupled coaxially to each other to close the coupled part with the heat-exchange pipes being bent and connected between the coupled main pipes.

One of the pair of main pipes 1 is connected to a discharge side of a fluid supply source, while the other is connected to a suction side of the fluid supply source.

Thus, the fluid discharged from the fluid supply source flows from one main pipe 1 through the plurality of the heat-exchange pipes 2 to the other main pipe 1, and then flows therefrom back to the fluid supply source or is directly discharged therefrom.

In any of those types, air condition is carried out with thermal radiation from the cooling or heating fluid flowing through the heat-exchange pipes 2 between the main pipes.

In such pipe mat, a sectional area of the main pipe 1 is needed to be significantly larger than that of the heat-exchange pipe 2. This is due to a need to distribute the fluid, supplied to one main pipe 1, into the individual heat-exchange pipes and then to collect the fluid, after flowing through the heat-exchange pipes 2, into the other main pipe 1.

For this reason, it is needed to increase the sectional area of the main pipe 1. However, due to the circular section of the main pipe 1, it is unavoidable that the main pipe itself will increase in diameter if the sectional area is made larger.

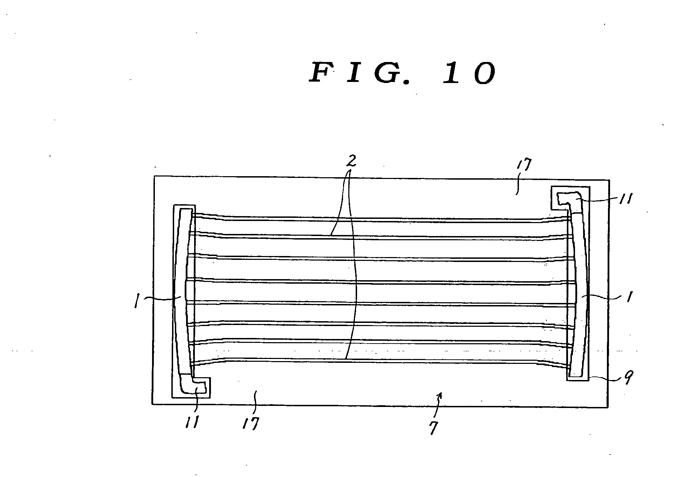

In case of using the above main pipe of circular section, when the heat-exchange pipes 2 are heat-welded to the main pipes 1, the main pipes 1 may be curved as illustrated in Fig. 10. The reason is described in the following paragraphs.

Typically, a synthetic resin-made pipe is continuously extrusion-molded, and the pipe extruded from the die is stretched while the diameter decreases in order to determine a size. In such sizing, a pulling force is applied to the pipe, and the pulling force remains in the pipe as stress.

Under the stress in the main pipe 1 as explained above, when heat is applied to it for welding to the heat-exchange pipes 2, the stress on the heated portions is released. Releasing of the stress returns the heated portions to the state before the pulling force is applied. Particularly, the heat-exchange pipes 2 are required to be aligned with one another with respect to the main pipe. The above heated portions of the main pipe are therefore shrunk along the aligning direction to decrease in length compared with those of other portions.

This causes the main pipe 1 to curve as illustrated in Fig. 10 after the heat-exchange pipes 2 are welded to the main pipe 1.

Because of the curving of the main pipe 1 as explained above, the heat-exchange pipes 2 located in the middle portion of the main pipe are elongated. This pulling force leads to a problem of accelerated degradation of the heat-exchange pipe or the allowance of the heat-welded portion to come unstuck.

The curving of the main pipe 1 further causes another problem in which, for example, when the curved main pipe 1 is mounted on a flooring 7 as illustrated in Fig. 10, it is difficult to fit the main pipe 1 into a groove 9 provided for accommodating the main pipe 1.

Regarding the above pipe mat, the increase in diameter of the main pipe 1 further causes various problems.

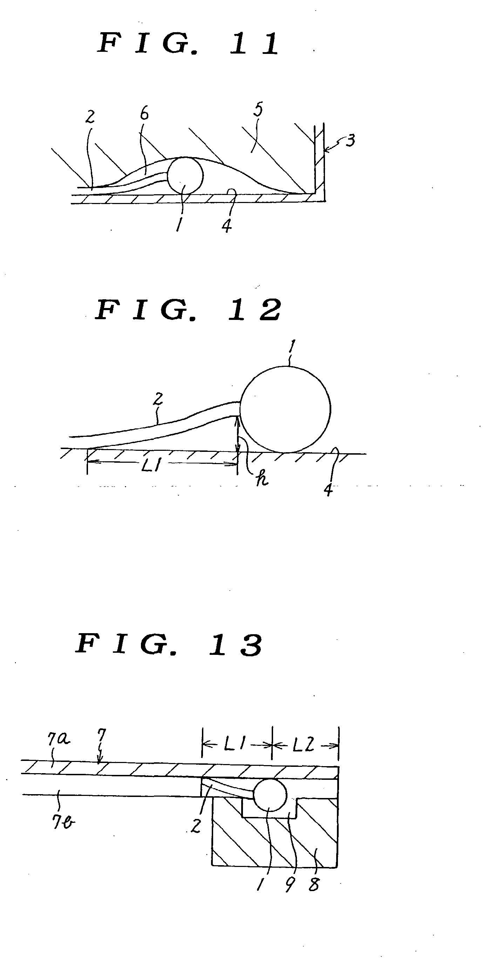

First, the case when the pipe mat is mounted in a ceiling panel 3 is explained. As illustrated in Fig. 11, the pipe mat is laid on a backside 4 of the panel 3 and a thermal insulation 5 is laid on the pipe mat.

Under such situation, if the main pipe 1 is thick, the following problems arise. Specifically, the main pipe 1 increased in diameter brings about a state that the welding portion between the main pipe 1 and the heat-exchange pipe 2 is isolated from the backside 4. As the main pipe 1 increases in diameter, a height h of the isolation increases as illustrated in Fig. 12. In turn, as the height h increases, a length L1 increases from the main pipe to the point where the heat-exchange 2 is in contact with the backside 4.

Increasing of the length L1, in which the heat-exchange pipe 2 is not in contact with the backside 4 of the ceiling panel 3, means that no heat will transfer directly from the heat-exchange pipes 2 to the ceiling panel 3 along the portion corresponding to length L1. Therefore, the portion corresponding to the length L1 is not sufficiently heated. This produces temperature variations on the ceiling panel.

Considering the ceiling panel individually, the temperature variations do not raise a serious problem. However, in considering the entire room, many ceiling panels 3 are mounted. Particularly, the portions corresponding to the length L1 are located around the borders between the adjacent ceiling panels. Thus, the length in which the heat of the heat-exchange pipe 2 does not transfer directly to the ceiling panel 3 is twice. Since an area in which the heat does not transfer directly to the ceiling panel 3 becomes equal to the result of multiplying the length L1 by a width, the area is very large in total.

For this reason, increasing of the diameter of the main pipe 1 reduces efficiency of cooling or heating of air conditioning.

Next, when the pipe mat is laid on the ceiling panel 3, the thermal insulation 5 is laid on the pipe mat as explained above. However, since the elasticity of the thermal insulation 5 is high, it does not completely fit the main pipe 1. This forms a space layer 6 around the main pipe 1 as illustrated in Fig. 11. If the space layer 6 is thus formed around the main pipe 1, for example, when cooling water for air conditioning flows in the pipe mat, condensation occurs on the main pipe 1.

Once condensation forms on the backside of the ceiling, the condensation may then seep into the ceiling surface of the room. At worst, the condensation may drip into the room.

In order to avoid such an event, conventionally, a predetermined portion of the thermal insulation 5, or a portion thereof to cover the main pipe 1 is hollowed. However, problems arise due to the time and the cost required in order to perform the hollowing work.

The pipe mat of the above type is also used for heating floors. In the use for heating the floor, the pipe mat is installed in a flooring 7 as illustrated in Fig. 13 or to tatami mats (not shown). Here, the case of installing the pipe mat to the flooring 7 will be explained.

A subflooring board 7b is bonded on the underside of a surface floorboard 7a to form the flooring 7. A plurality of grooves are formed on the bonding the surface of the subflooring board 7b. The aforementioned heat-exchange pipes 2 are fitted into the grooves. After that, the surface floorboard 7a and the subflooring board 7b are bonded while the main pipe 1 is exposed to the underside of the surface floorboard 7a as shown in Fig. 13.

Under such situation, as in the case of the ceiling panel 3, a length L1 of a portion of the heat-exchange pipe 2 which is out of contact with the surface floorboard 7a increases.

In addition, due to the circular-sectional shape of the main pipe 1, the main pipe 1 is in point-contact with the surface floorboard 7a. Although the main pipe 1 is fed with an abundance of fluid and therefore has the largest amount of heat in the pipe mat, a heat-radiation area of the main pipe 1 onto the surface floorboard 7a is extremely decreased due to the point contact of the main pipe 1 with the surface floorboard 7a,. Hence, a portion corresponding to a length L2 from the above contacting point to an end of the surface floorboard 7a is only slightly heated.

In short, the flooring 7 has lower temperatures in portions corresponding to the lengths L1 plus L2. Particularly, in the case of the floor heating, a person who is in contact with the floor will directly feel the temperature variations as a matter of course. If the person's skin touches a cooler portion of the floor, this may make the person uncomfortable. Therefore, at worst, the temperature variations of the floor heating may be perceived as indications of a defective system.

It should be noted that the small contact area of the circular shaped main pipe decreases the thermal efficiency thereof as described above, and the same holds true for the pipe mat applied to the ceiling panel 3.

Additionally, when the above pipe mat is used for the flooring 7, the following problem arises associated with joists 8 of a roofed and walled structure. For example, when the flooring 7 is laid on the joists 8, the flooring 7 is disposed at the right angles to the joists 8. In another words, the flooring 7 runs over the adjacent joists 8.

Running the flooring 7 over the joists 8, as shown in Fig. 13, the main pipe 1 lies on a joist 8.

However, the large-diameter main pipe 1 of circular section protrudes downward from the subflooring board 7b. Therefore, it is impossible to avoid the interference between the projecting portion of the main pipe 1 and the joist 8.

The interference between these does not allow the flooring 7 to be laid horizontally. Thus, a groove 9 is expressly formed in the joist 8 to fit the main pipe 1 therein. However, the formation of the groove 9 in the joist 8 has effects on the strength of the joist 8, and also time and efforts are needed for forming the grooves 9. For these reasons, under the present circumstances, it is difficult that the formation of the grooves is received at a site of construction.

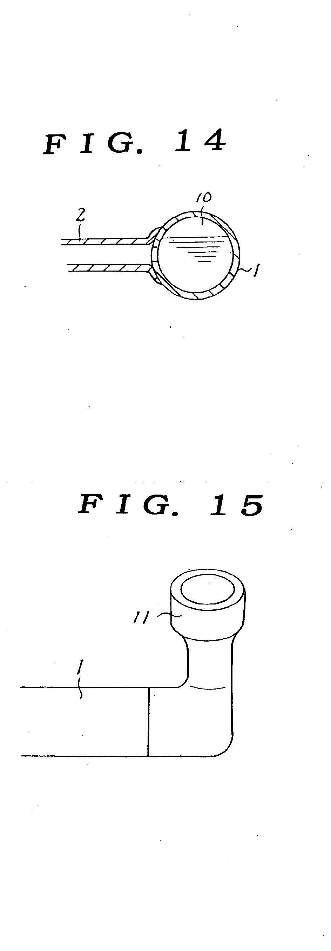

Moreover, when the main pipe of circular section is applied, typically, air 10 may be not completely purged from the main pipe 1 and remain therein as illustrated in Fig. 14. When the main pipe 1 has a circular sectional shape, the main pipe 1 automatically form a portion at a higher level than the heat-exchange pipe 2. As the height of the above-described portion increases, more air 10 remains in the main pipe 1. The leading cause for this is a difference in specific gravity between the fluid and air. If there is a difference of the specific gravity and the main pipe 1 increases in diameter, the air remaining in the main pipe 1 becomes difficult to remove.

The state that air remains in the main pipe 1 and cannot remove refers as "air lock". If the air lock occurs, flow resistance in the area of the air lock increases. Hence, because of the air lock, the fluid does not flow smoothly in the heat-exchange pipes 2 situated downstream from the air lock, resulting in the temperature variations among the heat-exchange pipes.

In the case of the main pipe of circular section, it is almost impossible to mount a connector 11 on the side surface of the main pipe 1. Conventionally, the connector 11 has been mounted on an end of the main pipe 1 as shown in Fig. 15. Moreover, in the majority of cases, the connector 11 should be an elbow type as illustrated in Fig. 15.

Limiting a mounting position for the connector 11 as explained above causes the problem of decreasing flexibility in design.

Mounting the elbow type connector 11 at the end of the main pipe 1 is equivalent to extending the main pipe 1 by the length of the connector 11. The extending of the main pipe 1 also adds constraints to the flexibility in design therefor.

As explained above, by providing the connector at the end of the main pipe 1, the heat-exchange pipe 2 cannot be arranged in a portion 17 (see Fig. 10) corresponding to the connector 11. The presence of the connector 11 does not allow the portion 17, in which no heat-exchange pipe 2 is arranged, to be sufficiently cooled or heated. This creates the temperature variations on the contact object, i.e. the ceiling panel, the flooring or the like. Such temperature variations produce the variety of aforementioned problems.

At all events, the use of the main pipe of circular section involves a great number of problems as described above.

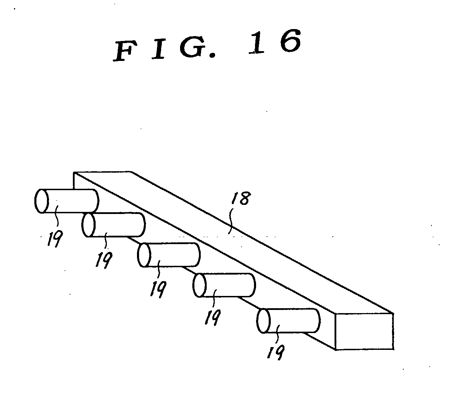

In this point, as illustrated in Fig. 16, a rectangular collecting tube 18 connected with a plurality of joint tubes 19 is described in Japan Utility Model Laid-open No. 60-111417 disclosed by the present applicant.

As in the case of the collecting tube 18, if the main pipe is shaped in rectangle, flexural rigidity can be increased, resulting in preventing the main pipe from bending.

In addition, when the main pipe has a rectangular shape, the area in contact with the panel can increase, and thus the efficiency of thermal transfer from the main pipe to the panel can be achieved.

In other words, when the main pipe is shaped in rectangle, it is possible to eliminate the aforementioned disadvantages produced in use of the circle-sectional main pipe to a certain extend.

However, the rectangular main pipe shaped as explained above has a channel of rectangular section. In the channel of rectangular section, flow resistance is high at corners of the channel. Therefore, a flow velocity is lost around the corner or the fluid is obstructed at the corners. If a part in which the flow velocity is slow or a part in which the fluid is obstructed exists in the main pipe, waste accumulates in such part or algae, bacteria or the like grow in such part. Then, if the algae or bacteria growing in the main pipe propagate, this causes a problem of further increasing the flow resistance.

Further, when the algae or the like propagating in the main pipe spreads into the thin heat-exchange pipe, the heat-exchange pipe may be clogged with the algae or the like. Once the heat-exchange pipe is clogged, the fluid is not supplied to the corresponding heat-exchange pipe. This causes a problem with the temperature variations produced over the surface of the flooring or the ceiling panel.

In order to increase the contact range of the heat-exchange pipe with the ceiling panel and the like, it is conceivable that the heat-exchange pipe is roughly bent to forcibly go in contact with the panel.

However, even if the heat-exchange pipe is forcibly bent, it is almost impossible to retain the bending state because of the rebounding force of the heat-exchange pipe.

When heat-exchange pipes are connected as in the conventional example shown in Fig. 16, they are connected to the joint tubes19. However, the heat-exchange pipe having connected to the joint tube 19 cannot be bent at the portion corresponding to the joint tube 19.

The above conventional example thus has a problem of extending part of the heat-exchange pipe separating upward from the ceiling panel or the like.

In addition, when the heat-exchange pipe is forcibly bent, an extremely strong force is exerted on the connecting portion between the collecting tube 18 and the joint tube 19. If this state continues to a certain extent, the joint tube 19 may eventually separate from the collecting tube 18.

### SUMMARY OF THE INVENTION

It is an object of the present invention to provide a pipe mat for air conditioning which is capable of preventing disadvantages caused by a rectangular main pipe and of solving the above variety of problems that arise in a main pipe of circular section.

The present invention is made on the precondition that a pipe mat used for air-conditioning for cooling or heating air through thermal radiation from cooling or heating fluid, includes a pair of main pipes made of a synthetic resin and having a larger sectional area, and a plurality of heat-exchange pipes-made of a synthetic resin and having a smaller sectional area, both ends of each heat-exchange pipe being heat-welded between the pair of main pipes, the fluid being flowing from one of the main pipes through the heat-exchange pipes to the other main pipe for the thermal radiation.

A first invention is characterized, with premising on the above pipe mat for air-conditioning, in that the main pipe is formed in flatness, and has corners rounded inside, and in that the heat-exchange pipes are heat-welded onto a side surface corresponding to the thickness of the main pipe.

According to the first invention, since each corner formed inside the main pipe is rounded, the flow of fluid in the main pipe can be improved.

By thus improving the flow of fluid in the main pipe, algae, bacteria or the like do not propagate.

As a result, it is avoided that algae, bacteria or the like cause an increase of flow resistance in the main pipe and also clogs the heat-exchange pipe.

In addition, since the main pipe is shaped in flatness, it is possible to dramatically increase the contact area of the pipe mat with a contact substance such as a ceiling panel or flooring.

Therefore, due to the increased contact area, all the problems associated with the pipe mat using the main pipe of circular section can be solved.

A second invention is characterized in that, in the above first invention, the main pipe is provided with at least one horizontal surface and configured to establish contact between the horizontal surface and a heat-exchange panel or the like.

According to the second invention, since the main pipe is provided with the horizontal surface which is in contact with the heat-exchange panel or the like, efficiency of thermal transfer can be improved.

A third invention is characterized in that, in the above second invention, the end of the heat-exchange pipe is molten to expand, and the expanded portion is heat-welded to the main pipe and formed in a shape not to extend onto the horizontal surface of the main pipe.

According to the third invention, the expanded portion of the heat-exchange pipe does not extend onto the horizontal surface of the main pipe. Therefore, the expanded portion is not inserted between the main pipe and the contact substance, such as the heat-exchange panel, to separate the main pipe from the contact substance. For such structure, no space is formed between the contact substance and the main pipe, resulting in improvement in efficiency of thermal transfer.

A fourth invention is characterized in that, in the second or third invention, the heat-exchange pipe is heat-welded to the main pipe while the underside of the heat-exchange pipe continues to the horizontal surface of the main pipe.

According to the fourth invention, since the horizontal surface of the main pipe continues to the underside of each heat-exchange pipe, the heat-exchange pipes do not separate upward from the contact substance.

Thus, efficiency of thermal transfer can be increased with the increase of the contact area.

A fifth invention is characterized in that, in the second or third invention, the heat-exchange pipe is heat-welded to the main pipe while an axis of the heat-exchange pipe is inclined with respect to the horizontal surface of the main pipe.

According to the fifth invention, since the axis of each heat-exchange pipe is inclined with respect to the horizontal surface of the main pipe, the heat-exchange pipe can become in contact with the contact substance at a point close to the main pipe.

A sixth invention is characterized in that, in the first invention through the fifth invention, the heat-exchange pipe is shaped in flatness.

According to the sixth invention, since each heat-exchange pipe has a flat-sectional shape, the contact area between the heat-exchange pipe and the contact substance can be increased.

As a result, efficiency of thermal transfer can be increased with the increase of the contact area.

### BRIEF DESCRIPTION OF THE DRAWINGS

Fig. 1 is a fragmentary perspective view of a first embodiment according to the present invention.

Fig. 2 is a fragmentary sectional view of a state when a pipe mat is mounted in a ceiling panel 3.

Fig. 3 is a fragmentary sectional view of a state when the pipe mat is mounted in a flooring 7.

Fig. 4 is an enlarged fragmentary view.

Fig. 5 is a partial perspective view of a state when a connector 16 is provided on a main pipe MP.

Fig. 6 is a diagram illustrating a second embodiment according to the present invention, which is a partially sectional view illustrating a state when a horizontal surface 15 of a main pipe MP is flush with an underside 23 of a heat-exchange pipe HP.

Fig. 7 is a diagram illustrating a third embodiment, which is a partially sectional view illustrating a state when a heat-exchange pipe HP is connected to a main pipe MP of semi-circular section.

Fig. 8 is a diagram illustrating a fourth embodiment, which is a partially sectional view illustrating a state when a heat-exchange pipe HP is connected to a main pipe MP of trapezoid section.

Fig. 9 is a fragmentary perspective view of a pipe mat.

Fig. 10 is a plane view illustrating a state when main pipes of the pipe mat are bent.

Fig. 11 is a fragmentary sectional view of state when the pipe mat is mounted in a ceiling panel.

Fig. 12 is an explanatory diagram illustrating a non-contact part of the pipe mat.

Fig. 13 is a fragmentary sectional view of a state when the pipe mat is mounted in flooring.

Fig. 14 is an enlarged fragmentary view.

Fig. 15 is a partially perspective view of a state when a connector is provided to a main pipe.

Fig. 16 is a fragmentary sectional view illustrating a conventional example.

### DETAILED DESCRIPTION OF THE PREFERRED EMBODIMENTS

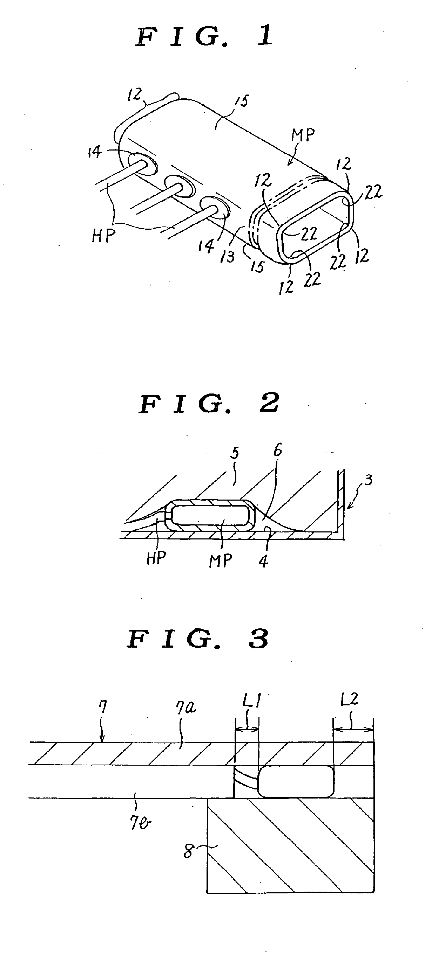

Fig. 1 is a partially perspective view illustrating a first embodiment according to the present invention, in which a sectional shape of a main pipe MP is rectangular.

The rectangle has arc-shaped edges 12 and corners 22 formed inside the edges 12 are rounded. This reduces flow resistance of fluid produced at the corners 22. As the flow resistance is reduced at the corners 22, a flow velocity is developed. For this reason, the fluid does not remain at the corners.

Accordingly, it is possible to prevent accumulation of waste at the corners 22 of the main pipe MP and propagation of algae or bacteria at the corners 22.

It should be noted that due to the arcuate edge 12 of the main pipe MP, it is also possible to prevent concentration of stress on the edge 12.

The main pipe MP shaped in rectangular section as explained above has side surfaces 13 on the shorter sides and horizontal surfaces 15 on the longer sides.

One of the above side surfaces 13 of the main pipe MP is welded with ends of heat-exchange pipes HP.

In order to weld the heat-exchange pipe HP to the main pipe MP as explained above, a welding portion of the heat-exchange pipe HP is heated to expand for welding. At this time, the heating is also added to the main pipe MP. However, since the sectional shape of the main pipe is rectangular and the part of the main pipe directly applied with the heating is on the side surface 13, a section modulus of the main pipe MP is increased as a width of the horizontal surface 15 is increased. If the section modulus of the main pipe MP is thus increased, strength for resisting bending stress is increased as a matter of course.

When a pipe of circular section and a pipe of rectangular section are equal in sectional area, a width of the above horizontal surface 15 of rectangular section is longer than a diameter of the pipe of circular section. For this reason, when the sectional shape is rectangular such as in the embodiment, the section modulus of the side surface 13 is increased relative to the bending stress generated by shrinkage of the side surface 13.

Since the main pipe MP of the embodiment is relatively increased in section modulus, even when the heat-exchange pipes HP are heat-welded to the side surface 13 as explained above, the entire main pipe is not bent.

In the embodiment, the aforementioned expanded portion 14 of the heat-exchange pipe HP is also formed in an oval shape not extending onto the horizontal surfaces 15, 15 of the longer side of the main pipe MP.

If the expanded portion 14 extends onto the upper and lower horizontal surfaces 15, 15, the extending portion forms a space between the horizontal surface 15 and the contact surface of a ceiling panel or flooring.

However, insofar as the expanded portion 14 does not extend onto the horizontal surfaces 15 as described above, the lower horizontal surface 15 does not separate upward from the contact surface, and therefore is in close contact with the contact surface, resulting in improvement of efficiency of thermal transfer.

Fig. 2 illustrates a state when the pipe mat of the first embodiment is applied to the ceiling panel 3. As is clear from Fig. 2, a length of the portion of the heat-exchange pipe HP which is out of contact with a backside of the panel is extremely short. In addition, since the horizontal surface 15 of the main pipe MP is in absolute contact with the backside 4 of the ceiling panel 3, temperatures of the cooling or heating fluid in the main pipe MP are efficiently transferred to the ceiling panel 3.

Even when the main pipe MP has the same sectional area as that of the conventional main pipe 1 of circular section, the main pipe MP maintains low in height. For this reason, it is possible to appropriately lay the thermal insulation 5 on the main pipe MP to decrease the size of the space layer 6. Accordingly, the thermal insulation 5 is not required to be especially hollowed for decreasing the size of the space layer 6 such as in the conventional example, and moreover formation of condensation is prevented.

Fig. 3 is a sectional view illustrating conditions in using the pipe mat for the flooring 7. As is clear from Fig. 3, it is possible that the main pipe MP has the same thickness as that of the subflooring board 7b. The main pipe MP and the joist 8 do not therefore interfere with each other, and it is not required to form the conventional groove 9 on the joist 8.

Greater advantages than anything else are in that the length L1 of the non-contact portion of the heat-exchange pipe HP with the underside of the floorboard surface 7a can be decreased because of the directly heat-welding between the heat-exchange pipes HP and the main pipe MP, and in that the contact area of the main pipe MP with the floorboard surface 7a can be increased.

In consequence, the efficiency of thermal transfer of the pipe mat to the flooring 7 is dramatically improved as compared with that of the conventional pipe mat, and further the temperature variations effected on the flooring 7 are seldom produced.

Particularly, the length L2 from the main pipe MP to the end of the flooring 7 is shortened. The shortening of the length L2 allows the thermally non-transferred areas of the flooring 7 to be significantly decreased. Only by thus flatting the main pipe MP, most of the temperature variations on the flooring 7 can be avoided.

As explained in the foregoing, since the flooring 7 is in direct contact with a person's skin, even minimal temperature variation thereon, if present, would be subtly felt, and the corresponding product is regarded as a defective. According to the embodiment, however, such problem never arises.

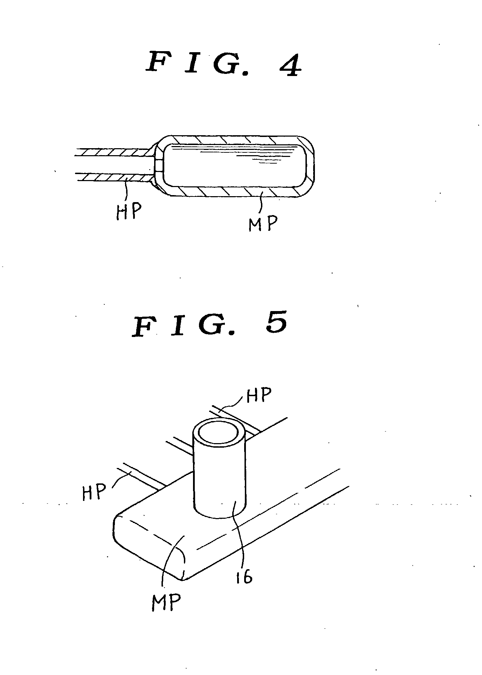

As illustrated in Fig. 4, a decreased height of the main pipe allows air to seldom remain in the main pipe MP passing the fluid. For this reason, the air lock does not cause the temperature variations between the adjacent heat-exchange pipes HP as it does in the prior art.

As further illustrated in Fig. 5, since the main pipe MP is provided with the horizontal surface 15, a connector 16 can be coupled to any position of the horizontal surface 15. In turn, since the connector 16 can be coupled to any position of the horizontal surface 15, the degree of freedom of the design is dramatically enhanced.

The location of the connector 16 on the horizontal surface 15 allows the main pipe MP to fully extend to a location corresponding to the portion 17 of the flooring 7 illustrated in Fig. 10. Accordingly, the heat-exchange pipe HP is arranged in a location corresponding to the above portion 17. Since the heat-exchange pipe HP is arranged in the location corresponding to the portion 17, the temperature variations are not produced on the contact object, i.e. the ceiling panel, the flooring or the like.

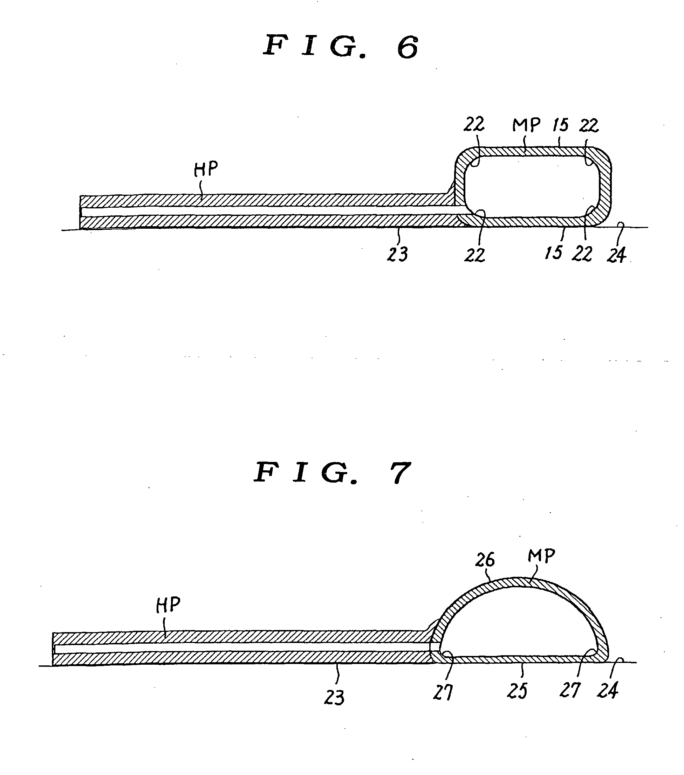

The second embodiment 2 illustrated in Fig. 6 changes the mounting position of the heat-exchange pipes HP to the main pipe MP.

As illustrated in Fig. 6, the heat-exchange pipe HP is heat-welded onto the side surface 13 of the main pipe MP and near the horizontal surface 15 on the lower side of Fig. 6. Through the heat-welding in this way, the underside 23 of the heat-exchange pipe HP continues to the horizontal surface 15 of the main pipe MP. In other words, the underside 23 of the heat-exchange pipe HP is flush with the horizontal surface 15 of the main pipe MP. Such a structure prevents the heat-exchange pipe HP from separating upward from the panel surface 24.

In consequence, the efficiency of thermal transfer is further increased because the heat-exchange pipes HP is in absolute contactwith the heat-exchange panel such-as the ceiling panel, the flooring or the like.

Regarding the above pipe mat shown in Fig. 6, the heat-exchange pipes HP may be fastened to the main pipe MP of rectangular section through heat-welding, but the pipe mat can be fabricated as follows.

The heat-exchange pipes HP are fastened to a main pipe MP of circular section through the heat-welding.

Next, the main pipe MP having connected to the heat-exchange pipes HP is sent through a pressing machine, to be plastic-deformed into a shape of rectangular section.

At the time when the main pipe MP is plastic-deformed in this way, the underside 23 of the heat-exchange pipe HP is brought to align with the horizontal surface 15 of the main pipe MP.

Due to this, the underside 23 of the heat-exchange pipe HP and the horizontal surface 15 of the main pipe MP are continued to be flush with each other.

And also, when the main pipe MP of circular section is deformed by the pressing machine as explained above, the corners of the main pipe MP do not form an acute angle. In other words, if the main pipe MP of circular section is deformed by means of pressing, the corner 22 in the main pipe MP can be automatically rounded.

A third embodiment illustrated in Fig. 7 changes a sectional shape of a main pipe MP to semicircular.

A horizontal surface 25 is formed on a portion of the main pipe MP on the lower side of Fig. 7, and a connecting portion between the horizontal surface 25 and an arcuate surface 26 of the main pipe MP is formed to be a curved face. A corner 27 formed inside the main pipe MP is rounded.

The main pipe MP structured as explained above is heat-welded with the heat-exchange pipe HP such that the underside 23 thereof continues to the horizontal surface 25 of the main pipe MP.

According to the third embodiment as explained above, since flow resistance at the corner 27 in the main pipe MP is reduced as in the case of the second embodiment, a flow velocity is faster relative to the amount of reduction.

In consequence, it is possible to prevent accumulation of waste and growing of algae, bacteria or the like in the corner 27.

Since the main pipe MP and the heat-exchange pipes HP are in close contact with the panel surface 24, high efficiency of thermal transfer is achieved.

Since the main pipe MP is shaped in semi-circle, even if a large force acts thereon from above, the main pipe MP can sufficiently support it. For example, if a heavy body such as a piano is placed above the main pipe MP, the main pipe MP is not crushed.

In a fourth embodiment illustrated in Fig. 8, a sectional shape of a main pipe MP is a trapezoid.

In the fourth embodiment, an axis a of the heat-exchange pipe HP is inclined with respect to a horizontal surface 28 formed in the main pipe MP. Therefore, putting the pipe mat on the panel surface 24 brings a state in which the axis a in a proximal end of the heat-exchange pipe HP is inclined with respect to the panel surface 24. Provided that the axis a of the heat-exchange pipe HP is inclined as explained above, without forcibly bending the heat-exchange pipe HP, the heat-exchange pipe HP can make contact with the panel surface 24 very close to the main pipe MP. In other words, a range L1 of the heat-exchange pipe HP separating from the panel surface is decreased.

By thus decreasing the separating range of the heat-exchange pipe HP, the efficiency of thermal transfer is increased.

In the fourth embodiment, the corner 29 in the main pipe MP is also rounded to develop a flow velocity at the corner 29.

By developing the flow velocity, waste does not accumulate and algae, bacteria or the like do not propagate.

In consequence, it is possible to prevent the main pipe MP from an increase of flow resistance and the heat-exchange pipe HP from being clogged with algae or the like.

As described thus far, a rectangle, semi-circle, trapezoid and so on are employed as a sectional shape of the main pipe MP, but in addition to them, an elliptical, parallelogram, rhombus and so on may be considered. In other words, when a main pipe MP has any shape of a low profile, it corresponds to "flatness" of the present invention.

According to the first to fourth embodiments, because of a flat shape of the main pipe MP and each rounded corner of a channel formed inside the main pipe, the flow of fluid is improved. Then, due to the improved flow of fluid, waste does not accumulate and algae, bacteria or the like do not propagate in the main pipe MP.

By extension, waste, algae or the like never causes an increase in flow resistance in the main. pipe MP, and also the propagating algae never clog the heat-exchange pipe.

Particularly, since the above heat-exchange pipe HP is heat-welded to the main pipe MP, if it is clogged with such algae or the like, the heat-exchange pipe HP cannot be detached for cleaning. Therefore, when algae or the like clog the heat-exchange pipe HP, the entire pipe mat must be replaced. This is significantly uneconomical.

According to the aforementioned embodiments, however, such problems never arise because algae or the like do not clog the heat-exchange pipe HP.

It should be mentioned that in the first to fourth embodiments, the heat-exchange pipe HP is shaped in circular section, but as in the case of the main pipe MP, the heat-exchange pipe HP may be shaped in flat section or provided with a horizontal surface.

If the heat-exchange pipe HP is formed in a flat shape or provided with the horizontal surface, a contact area with the panel surface is increased, resulting in improvement of the efficiency of thermal transfer relative to the increased amount of the contact area.

### EXPLANATION OF CODES

- MP: MAIN PIPE
- HP: HEAT-EXCHANGE PIPE
- 14: EXPANDED PORTION
- 15, 25, 28: HORIZONTAL SURFACE
- 22, 27, 29: CORNER
- 23: UNDERSIDE OF HEAT-EXCHANGE PIPE
- a: AXIS OF HEAT-EXCHANGE PIPE

## Claims

1. A pipe mat used for air-conditioning for cooling or heating air through thermal radiation from cooling or heating fluid, including a pair of main pipes (MP) made of a synthetic resin and having a larger sectional area, and a plurality of heat-exchange pipes (HP) made of a synthetic resin and having a smaller sectional area, both ends of each heat-exchange pipe being heat-welded between said pair of main pipes, the fluid flowing from one of the main pipes (MP) through the heat-exchange pipes (HP) to the other main pipe (MP) for the thermal radiation, characterized:
in that said main pipe (MP) is formed in flatness, and has corners (22, 27, 29) rounded inside, and
in that said heat-exchange pipes (HP) are heat-welded onto a side surface (13) corresponding to the thickness of the main pipe (MP).

2. The pipe mat used for air-conditioning according to claim 1, characterized in that the main pipe (MP) is provided with at least one horizontal surface (15, 25, 28) and configured to establish contact between the horizontal surface (15, 25, 28) and a heat-exchange panel or the like (3, 7).

3. The pipe mat used for air-conditioning according to claim 2, characterized in that the end of the heat-exchange pipe (HP) is molten to expand, and the expanded portion (14) is heat-welded to the main pipe (MP) and formed in a shape not to extend onto the horizontal surface (15, 25, 28) of the main pipe.

4. The pipe mat used for air-conditioning according to claim 2 or 3, characterized in that the heat-exchange pipe (HP) is heat-welded to the main pipe (MP) while the underside of the heat-exchange pipe (HP) continues to the horizontal surface (15, 25, 28) of the main pipe.

5. The pipe mat used for air-conditioning according to claim 2 or 3, characterized in that the heat-exchange pipe (HP) is heat-welded to the main pipe (MP) while an axis (a) of the heat-exchange pipe is inclined with respect to the horizontal surface (15, 25, 28) of the main pipe.

6. The pipe mat used for air-conditioning according to any one of claims 1, 2, 3, 4 and 5, characterized in that the heat-exchange pipe (HP) is formed in flatness.
